# EUROPÄISCHE PATENTANMELDUNG

(11) **EP 0 956 999 A2**
(43) Veröffentlichungstag der Anmeldung: **17.11.1999**
(21) Anmeldenummer: 99108938.4
(22) Anmeldetag: 05.05.1999
(51) Int. Cl.: B60Q 1/30

(54) **Rastbefestigung**

(30) Priorität: 07.05.1998 DE 19820360
(71) Anmelder: Hella KG Hueck & Co., 59552 Lippstadt (DE)
(72) Erfinder: Hamelbeck, Antonius, 59609 Anröchte (DE)

(57) **Zusammenfassung**

Die Erfindung bezieht sich auf eine Rastbefestigung, insbesondere zur Befestigung einer hochgesetzten Zusatzbremsleuchte (2) an einer Kfz-Heckscheibe (9), bestehend aus mindestens einer
an einem Gehäuse (8) angeordneten Haltelasche (3,4) und einem mit einer dem Gehäuse (8) abgewandten Rückseite an der Kfz-Heckscheibe (9) aufklebbaren Führungsteil (5,6), mit dem die Haltelasche (3,4) einrastend verbindbar ist, wobei die Haltelasche (3,4) als flache, in vertikaler Richtung nach unten und mit einer der Heckscheibe zugewandten flachen Vorderseite parallel zur Kfz-Heckscheibe (9) ausgerichtete Zunge (10,11) ausgebildet ist, die an ihrem freien Ende eine Rastnase (16) aufweist, die mit einem freien Ende gegenüber der Vorderseite (12) verdreht ist, und wobei das Führungsteil (5,6) eine auf die Zunge (10,11) abgestimmte Führung mit einer unteren Aussparung aufweist, in die Rastnase (16) in einer Raststellung eingreift.

## Beschreibung

Die Erfindung betrifft eine Rastbefestigung, insbesondere zur Befestigung einer hochgesetzten Zusatzbremsleuchte an einer Kfz-Heckscheibe, bestehend aus mindestens einer an einem Gehäuse angeordneten Haltelasche und einem mit einer dem Gehäuse abgewandten Rückseite an der Kfz-Heckscheibe aufklebbaren Führungsteil, mit dem die Haltelasche einrastend verbindbar ist.

Aus der DE 40 35 639 C 2 ist eine Zusatzbremsleuchte für Kraftfahrzeuge bekannt, die eine Rastbefestigung aufweist. Die Rastbefestigung besteht aus zwei in einem Abstand zueinander angeordneten Führungsteilen, die mit einer der Zusatzbremsleuchte abgewandten Rückseite an der Kfz-Heckscheibe aufklebbar sind. Die Führungen sind als doppel-T-förmige Schienen ausgebildet, über die das Gehäuse der Zusatzbremsleuchte mit Haltelaschen bzw. Halteteilen, die eine einen Flansch der Doppel-T-Schiene entsprechende Nut aufweisen, steckbar ist. Die Führungsnuten weisen an ihren offenen Enden auf beiden Seiten der in Flanschen eingreifenden Ränder wulstartige Verdickungen auf, die das stirnseitige Ende eines ersten Flansches verrastend hintergreifen. Um einen sicheren Sitz zu erzielen, ist eine Haltefeder angeordnet, die den ersten Flansch der Doppel-T-Schiene zwischen sich und dem Halteteil einklemmt.

Nachteilig bei der bekannten Rastbefestigung ist, daß eine zusätzliche Haltefeder notwendig ist. Durch die zusätzliche Feder verlängert sich die Montagezeit und die Kosten sind relativ hoch.

Aufgabe der vorliegenden Erfindung ist es daher, die bekannte Rastbefestigung so zu verbessern, daß auf eine zusätzliche Feder verzichtet werden kann und die Herstellung und die Montagekosten günstiger werden.

Die Aufgabe wird erfindungsgemäß dadurch gelöst, daß die Haltelasche als flache und mit einer der Heckscheibe zugewandten flachen Vorderseite parallel zur Kfz-Heckscheibe ausgerichtete Zunge ausgebildet ist, die an ihrem freien Ende eine Rastnase aufweist, die mit einem freien Ende gegenüber der Vorderseite verdreht ist, und daß das Führungsteil eine auf die Zunge abgestimmte Führung mit einer unteren Aussparung aufweist, in die die Rastnase in einer Raststellung eingreift.

Dadurch, daß die Rastnase am freien Ende der Zunge gegenüber der Vorderseite der Zunge verdreht ist und in montierter Stellung in eine Aussparung des Führungsteiles bzw. dessen Führung eingreift, ist die Rastnase in ihrer Raststellung relativ spannungs- und somit auch ermüdungsfrei. Die Haltelasche wird einfach in das Führungsteil bzw. die Führung eingesetzt und eingeschoben. Dadurch ist eine einfache, sichere und kostengünstige Montage möglich. Es werden keine zusätzlichen Rastfedern zum Festsetzen benötigt.

Nach einer bevorzugten Ausführungsform der Erfindung weist die Führung in ihrer Längsrichtung die Zunge verspannende Führungsrippen auf. Dadurch wird ein toleranzfreier Sitz quer zur Führung, d. h. insbesondere senkrecht zur Heckscheibe, gewährleistet.

Gemäß einer weiteren bevorzugten Ausführungsform der Erfindung weist das Gehäuse in einem Abstand zu einer in Längsrichtung der Zunge angeordneten Seitenfläche ein angeformtes Federelement auf, dessen der zweiten Fläche zugewandte Auflagefläche gegen eine Seitenfläche der Führung drückbar ist.

Durch das angeformte Federelement wird ein seitlicher toleranzfreier Sitz in dem Führungsteil gewährleistet, zudem wird bei der Montage durch das seitliche Federelement das Gehäuse gegenüber dem Führungsteil zentriert.

Gemäß einer weiteren bevorzugten Ausführungsform der Erfindung weist die Zunge an ihrem freien Ende eine schräg ausgebildete Hinterrastfläche auf. Durch die schräg ausgebildete Hinterrastfläche werden eventuell in vertikaler Richtung, d. h. in Richtung einer Zungenlängsachse liegende Toleranzen kompensiert.

Nach einer weiteren bevorzugten Ausführungsform der Erfindung weist das Gehäuse in einem Abstand zwei in entsprechende Führungen von Führungsteilen einrastbare Haltelaschen auf. Durch die Verwendung von zwei in einem Abstand zu einander angeordneten Haltelaschen wird ein sicherer Sitz gewährleistet.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Vorderansicht einer Zusatzbremsleuchte ohne Führungsteil,
- Figur 2:: eine vergrößerte Darstellung der Halteteile von Figur 1 im Ausriß, mit einem positionierten Führungsteil,

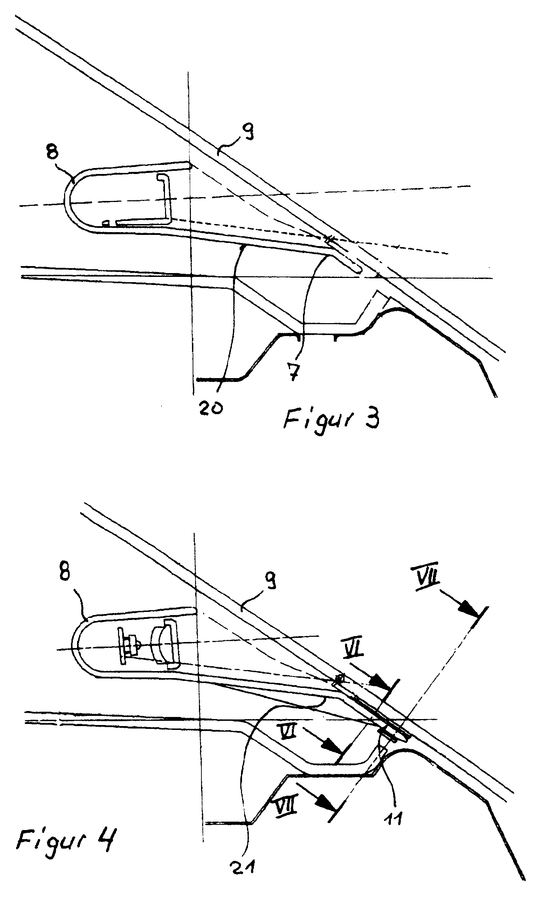

- Figur 3:: die Zusatzbremsleuchte von Figur 1 entlang der Linie III - III geschnitten,

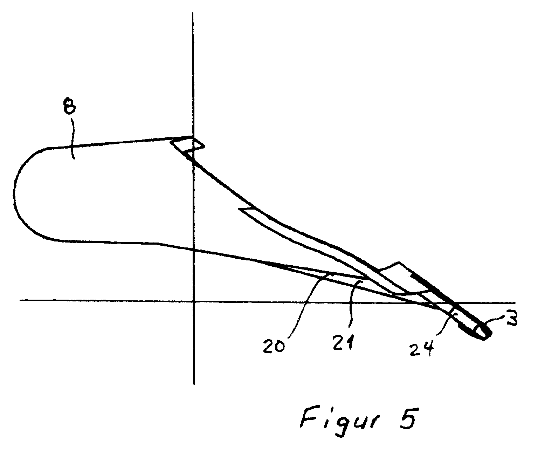

- Figur 4:: die Zusatzbremsleuchte von Figur 1 entlang der Linie IV - IV geschnitten,
- Figur 5:: eine Seitenansicht der Zusatzbremsleuchte von Figur 1 aus Richtung V,

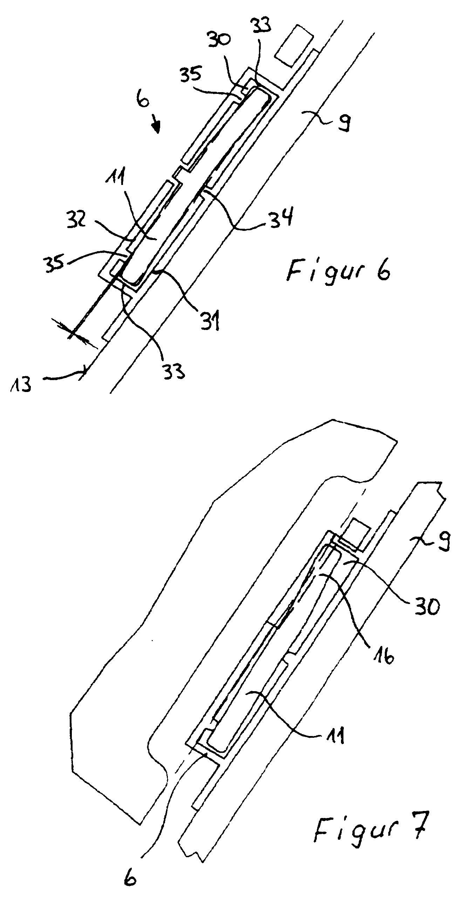

- Figur 6:: eine Zusatzbremsleuchte von Figur 4, entlang der Linie VI - VI geschnitten,

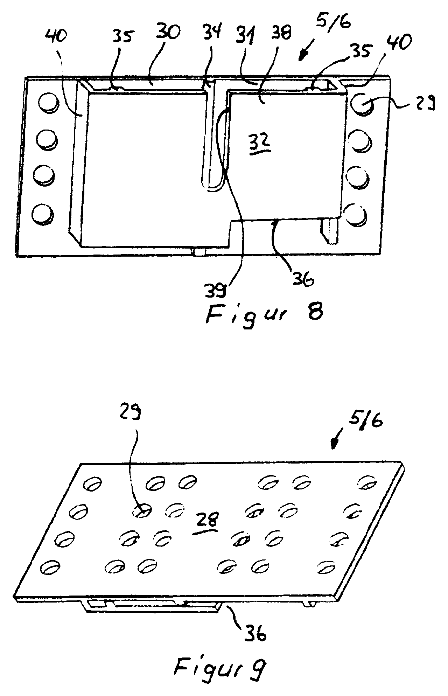

- Figur 7:: die Zusatzbremsleuchte von Figur 4 entlang der Linie VII - VII geschnitten,
- Figur 8:: eine räumliche Darstellung eines Führungsteiles aus vorderer Sicht und
- Figur 9:: eine räumliche Darstellung des Führungsteiles von Figur 8 aus rückwärtiger Sicht.

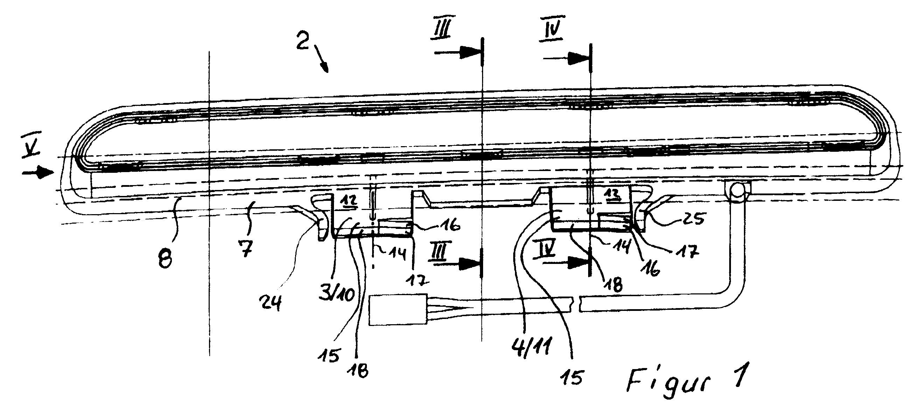

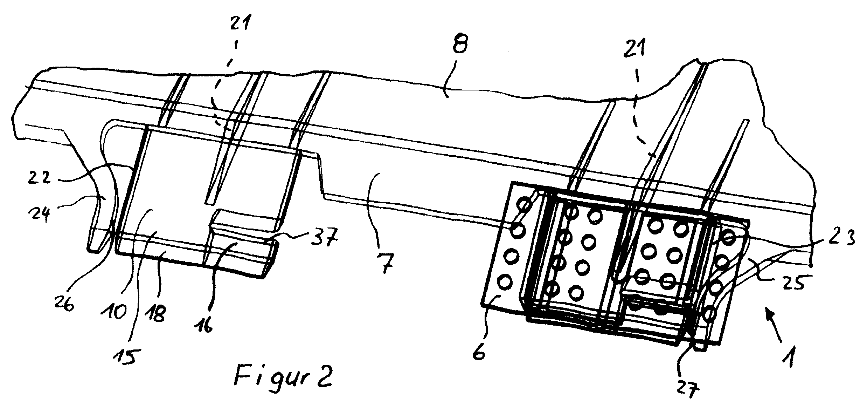

Eine Rastbefestigung (1) einer hochgesetzten Zusatzbremsleuchte (2) besteht im wesentlichen aus zwei Haltelaschen (3, 4) und zwei Führungsteilen (5, 6), siehe Figur 1 und Figur 2.

Die Haltelaschen (3, 4) sind an einem im vertikaler Richtung unteren Rand (7) eines Gehäuses (8) der Zusatzbremsleuchte (2) angeordnet. Die Haltelaschen (3, 4) sind als flache, in vertikaler Richtung schräg nach unten, etwa parallel zu einer Kfz-Heckscheibe (9) ausgerichtete Zungen (10, 11) ausgebildet. Die Zungen (10, 11) weisen eine flache Vorderseite (12) auf, die einer Rückseite (13) der Kfz-Heckscheibe (9) zugewandt ist. Die Zungen (10, 11) weisen eine jeweils in einer nicht dargestellten vertikalen Ebene liegende Längsachse (14) auf. An Ihrem freien Ende (15) weisen die Zungen (11, 12) eine Rastnase (16) auf, die mit einem freien Ende (17) gegenüber der Vorderseite (12) verdreht bzw. verschränkt ist. Die Rastnase (16) ist quer zur Längsachse (14) angeordnet. Die Zunge (10, 11) weist an ihrem freien Ende (15) auf ihrer Vorderseite (12) eine sich auch über die Rastnase (16) erstreckende Anlaufschräge (18) auf. Auf ihrer der Vorderseite (12) abgewandten Unterseite (19) weist die Zunge (10, 11) in Richtung der Längsachse (14) eine sich auch über eine anschließende Gehäuseunterseite (20) erstreckende Stabilisierungsrippe (21) auf.

Das Gehäuse (8) weist in einem Abstand zu in Längsrichtung der Zunge (10, 11) angeordneten außenliegenden Seitenflächen (22, 23) der Zunge (10, 11) jeweils ein angeformtes Federelement (24, 25) auf. Die Federelemente (24, 25) sind als federnde Arme ausgebildet, die den Seitenflächen (22, 23) benachbarte bzw. zugewandte Auflageflächen (26, 27) aufweisen.

Das Führungsteil (5, 6) weist eine der Kfz-Heckscheibe (9) zugewandte Rückseite (28) auf, mit der es an der Kfz-Heckscheibe (9) festklebbar ist. Um das Führungsteil (5, 6) sicher verkleben zu können, weist die Rückseite (28) eine Vielzahl von Bohrungen (29) auf. Auf ihrer der Rückseite (28) abgewandten Seite weist das Führungsteil (5, 6) eine Führung (30) auf, die im wesentlichen von einer der Rückseite (28) zugewandten hinteren Führungsseite (31), einer in einem Abstand zur hinteren Führungsseite (31) etwa parallel angeordneten vorderen Führungsseite (32) und zwei einander gegenüberliegenden seitlichen Führungsseiten (33) begrenzt wird. In Längsrichtung ist die Führung (30) offen. Die hintere Führungsseite (31) weist etwa mittig in ihrer Längsrichtung eine hintere Führungsrippe (34) auf. Die vordere Führungsseite (32) weist in ihren außenliegenden den seitlichen Führungsseiten (33) zugewandten Bereichen zwei vordere Führungsrippen (35) auf. Die Führungsrippen (34, 35) sind so angeordnet, daß sich bei in die Führung (30) eingeführter Zunge (10, 11) eine die Zunge (10, 11) verspannende 3-Punkt-Lagerung ergibt. Die Führung (30) weist an ihrer vorderen Führungsseite (32) eine untere Aussparung (36) auf, in die die Rastnase (16) in einer Raststellung bzw. im montierten Zustand eingreift. Um Toleranzen in Längsrichtung der Führung (30) bzw. der Zunge (10, 11) auszugleichen, weist die Rastnase (16) an ihrer der Anlaufschräge (18) abgewandten Seite eine schräg ausgebildete Hinterrastfläche (37) auf.

Die vordere Führungsseite (32) weist an ihrem oberen, der unteren Aussparung (36) abgewandten Ende (38), eine die Stabilisierungsrippe (21) aufnehmende Aussparung (39) auf.

Zur Montage der Zusatzbremsleuchte (2) wird das Gehäuse (8) mit seinen Haltelaschen (3, 4) in die Führungsteile (5, 6) eingeschoben. Dabei wird das Gehäuse (8) über die Federelemente (24, 25), die mit ihren Auflageflächen (26, 27) gegen parallel zur außenliegenden Seitenfläche (22, 23) bzw. parallel zu den seitlichen Führungsseiten (33) angeordnete Seitenflächen (40) drücken, in horizontaler Richtung zentriert.

Beim Einschieben der Zunge (10, 11) in die Führung (30) wird die Rastnase (16) über die Anlaufschräge (18) in die Ebene der Vorderseite (12) verdreht und federt nach Erreichen der Raststellung in die untere Aussparung (36) eingreifend zurück. Dabei schlägt die Rastnase (16) mit ihrer Hinterrastfläche (37) gegen die benachbarte vordere Führungsseite (32), so daß in Längsrichtung der Zunge (10, 11) vorhandene Toleranzen ausgeglichen werden.

Zur Demontage der Rastbefestigung (1) werden mit einem geeigneten Werkzeug die Rastnasen (16) in die Ebenen der Vorderseiten (12) zurückgedrückt und das Gehäuse (8) mit seinen Haltelaschen (3, 4) aus den Führungen (30) der Führungsteile (5, 6) herausgezogen.

## Patentansprüche

1. Rastbefestigung, insbesondere zur Befestigung einer hochgesetzten Zusatzbremsleuchte an einer Kfz-Heckscheibe, bestehend aus mindestens einer an einem Gehäuse angeordneten Haltelasche und einem mit einer dem Gehäuse abgewandten Rückseite an der Kfz-Heckscheibe (9) aufklebbaren Führungsteil, mit dem die Haltelasche einrastend verbindbar ist, dadurch gekennzeichnet, daß die Haltelasche (3, 4) als flache und in einer der Kfz-Heckscheibe (9) zugewandten flachen Vorderseite (12) parallel zur Kfz-Heckscheibe (9) ausgerichtete Zunge (10, 11) ausgebildet ist, die an ihrem freien Ende (15) eine Rastnase (16) aufweist, die mit einem freien Ende (17) gegenüber der Vorderseite (12) verdreht ist, und daß das Führungsteil (5, 6) eine auf die Zunge (10, 11) abgestimmte Führung (30) mit einer unteren Aussparung (36) aufweist, in die die Rastnase (16) in einer Raststellung eingreift.

2. Rastbefestigung nach Anspruch 1, dadurch gekennzeichnet, daß die Rastnase (16) quer zu einer Längsachse (14) der Zunge (10, 11) angeordnet ist.

3. Rastbefestigung nach Anspruch 1 oder 2, dadurch gekennzeichnet, daß die Rastnase (16) federnd ausgebildet ist und eine Anlaufschräge (18) aufweist, so daß sie beim Einsetzen der Zunge (10, 11) in die Führung (30) in eine in der Vorderseite (12) liegende Ebene biegbar und in ihre Raststellung in die Ausgangsstellung zurückfederbar ist.

4. Rastbefestigung nach einem der Ansprüche 1 bis 3, dadurch gekennzeichnet, daß die Führung (30) in ihrer Längsrichtung die Zunge (10, 11) verspannende Führungsrippen (34, 35) aufweist.

5. Rastbefestigung nach Anspruch 4, dadurch gekennzeichnet, daß die Führung (30) auf ihrer der Rückseite (13) der Kfz-Heckscheibe (9) zugewandten hinteren Führungsseite (31) eine hintere Führungsrippe (34) und an ihrer der hinteren Führungsseite (31) in einem Abstand gegenüberliegenden vorderen Führungsseite (32) zwei vordere Führungsrippen (35) aufweist.

6. Rastbefestigung nach einem der Ansprüche 1 bis 5, dadurch gekennzeichnet, daR das Gehäuse (8) in einem Abstand zu einer in Längsrichtung der Zunge (10, 11) angeordneten Seitenfläche (22, 23) der Zunge (10, 11) ein angeformtes Federelement (24, 35) aufweist, dessen der Seitenfläche (22, 23) zugewandte Auflagefläche (26, 27) parallel gegen eine zur Seitenfläche (22, 23) der Zunge (10, 11) angeordnete Seitenfläche (40) des Führungsteiles (5, 6) drückbar ist.

7. Rastbefestigung nach einem der Ansprüche 1 bis 6, dadurch gekennzeichnet, daR die Zunge (10, 11) an ihrem freien Ende (15) eine schräg ausgebildete Hinterrastfläche (37) zur Kompensation von vertikalen Toleranzen aufweist.

8. Rastbefestigung nach einem der Ansprüche 1 bis 7, dadurch gekennzeichnet, daR das Führungsteil (5, 6) an seiner Rückseite (28) eine Vielzahl von Bohrungen (29) zur besseren Verklebung aufweist.

9. Rastbefestigung nach einem der Ansprüche 1 bis 8, dadurch gekennzeichnet, daR zur Demontage die Rastnase (16) durch ein Werkzeug niederdrückbar und das Gehäuse (8) mit seiner Haltelasche (3, 4) aus der Führung (30) herausziehbar ist.

10. Rastbefestigung nach einem der Ansprüche 1 bis 9, dadurch gekennzeichnet, daß das Gehäuse (8) in einem Abstand zwei in entsprechende Führungen (30) von Führungsteilen (5, 6) einrastbare Haltelaschen (3, 4) aufweist.
